(19) Europäisches Patentamt / European Patent Office / Office européen des brevets

(11) **EP 2 332 301 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(21) Anmeldenummer: **09764705.1**

(22) Anmeldetag: **25.09.2009**

(51) Int Cl.:
*H04L 25/06* (2006.01)  *H04L 1/00* (2006.01)

(86) Internationale Anmeldenummer:
**PCT/DE2009/075053**

(87) Internationale Veröffentlichungsnummer:
**WO 2010/034309 (01.04.2010 Gazette 2010/13)**

(54) **VERFAHREN UND EINRICHTUNG ZUR QUANTISIERUNG VON LIKELIHOOD-QUOTIENTEN**

METHOD AND DEVICE FOR QUANTIZING LIKELIHOOD QUOTIENTS

PROCÉDÉ ET DISPOSITIF DE QUANTIFICATION DE QUOTIENTS DE VRAISEMBLANCE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.09.2008 EP 08165233**

(43) Veröffentlichungstag der Anmeldung:
**15.06.2011 Patentblatt 2011/24**

(73) Patentinhaber: **Vodafone Holding GmbH
40213 Düsseldorf (DE)**

(72) Erfinder: **RAVE, Wolfgang
01705 Freital-Pesterwitz (DE)**

(74) Vertreter: **Taruttis, Tilman et al
Bosch Jehle
Patentanwaltsgesellschaft mbH
Flüggenstraße 13
80639 München (DE)**

(56) Entgegenhaltungen:
- KHATTAK S ET AL: "Distributed iterative multiuser detection through base station cooperation" EURASIP JOURNAL ON WIRELESS COMMUNICATIONS AND NETWORKING 2008, Bd. 2008, 1. Januar 2008 (2008-01-01), XP002596283 HINDAWI PUBLISHING CORPORATION US DOI: DOI: 10.1155/2008/390489 in der Anmeldung erwähnt
- CHAKRABARTI A ET AL: "Code Designs for Cooperative Communication" IEEE SIGNAL PROCESSING MAGAZINE, Bd. 24, Nr. 5, 1. September 2007 (2007-09-01), Seiten 16-26, XP011194350 NJ, US ISSN: 1053-5888

**Beschreibung**

**Technisches Gebiet**

Die Erfindung betrifft ein Verfahren bei einer Signalverarbeitung zur Quantisierung von Likelihood-Quotienten binärer Zufallsvariablen für eine Übermittlung zwischen zwei oder mehreren Signalverarbeitungseinheiten.
Weiterhin betrifft die Erfindung eine Quantisierungseinrichtung bei einer Signalverarbeitung zum Quantisierung von Likelihood-Quotienten binärer Zufallsvariablen für eine Übermittlung zwischen zwei oder mehreren Signalverarbeitungseinheiten.

**Stand der Technik**

Es sind viele Signalverarbeitungsvorgängen bekannt, bei denen miteinander verknüpfte Signalverarbeitungseinheiten Wahrscheinlichkeiten austauschen, um bestimmte Aufgaben in einer Signalverarbeitungskette durchzuführen oder eine iterative Signalverarbeitung zu ermöglichen. Ein Beispiel einer solchen Art von Signalverarbeitung ist eine Decodierung von Turbo-Code, welcher in Mobilfunknetzen der dritten Generation (z.B. UMTS) zum Einsatz kommt. In diesem Beispiel erzeugen zwei Decoder jeweils eine Hypothese bezüglich eines empfangenen Nutzbitmusters. Dazu werden Wahrscheinlichkeiten, sogenannte Likelihood-Werte hergeleitet und verwendet. Die Decoder tauschen die Likelihood-Werte aus und erzeugen jeweils eine neue Hypothese unter Berücksichtigung der Likelihood-Werte des anderen Decoders. Dieser Vorgang wird iterativ solange wiederholt, bis beide Decoder die gleiche Hypothese für das Nutzbitmuster liefern.
Oft werden sogenannte Log-Likelihood-Quotienten erzeugt und als Wahrscheinlichkeitswerte zwischen verschiedenen Signalverarbeitungseinheiten ausgetauscht. Der Log-Likelihood-Quotient einer binären Zufallsvariable $X \in \{+1, -1\}$ ist definiert als:

$$L_X(x) = \log \frac{P_X(x = +1)}{P_X(x = -1)}$$

Dabei beschreibt $P_X(x)$ die Wahrscheinlichkeit, dass die Zufallsvariable $X$ den Wert $x$ annimmt. Zufallsvariablen wie $X$ oder $L(X)$ werden hier mit Großbuchstaben und ihre Realisation $x$, $l$ mit Kleinbuchstaben bezeichnet. Unter "log" wird der natürliche Logarithmus verstanden. Der Log-Likelihood-Quotient $L(X)$ wird im Folgenden auch als L-Wert oder LLR (Log-Likelihood-Ratio) der Zufallsvariable $X$ bezeichnet. Der Wertebereich von $L(X)$ erstreckt sich von $-\infty$ bis $+\infty$. Das Vorzeichen von $L(X)$ ist die Entscheidung, ob $x = +1$ oder $x = -1$ ist. Diese Entscheidung wird auch Hard-Decision genannt. Der Betrag $|L(X)|$ beschreibt die Zuverlässigkeit dieser Entscheidung.
Die Verteilung der L-Werte in dem Wertebereich $\pm\infty$ bzw. die Dichte der L-Werte hängt von dem auftretenden Rauschen in einem zur Übermittlung von x-Werten verwendeten Kanal ab. Für einen gaußschen Kanal folgt eine bimodale Gauß-Verteilung der L-Werte.

Da für Mittelwert $\mu$ und Varianz $\sigma^2$ die Beziehung $\mu_L = \sigma_L^2/2$ gilt, hängt die LLR-Dichte $p_L(l)$ nur von einer Größe $\sigma_L$ bzw. $\sigma_L^2$ ab:

$$p_L(l) = \frac{1/2}{\sqrt{2\pi}\sigma_L}\left[\exp\left(-\frac{\left(l - \frac{\sigma_L^2}{2}\right)^2}{2\sigma_L^2}\right) + \exp\left(-\frac{\left(l + \frac{\sigma_L^2}{2}\right)^2}{2\sigma_L^2}\right)\right]$$

Die Annahme eines gaußschen Kanals gilt für AWGN- (Additives Weißes Gaußsches Rauschen) oder flache Rayleigh-Kanäle und im Allgemeinen auch näherungsweise für große Datenblocklängen.

Die $L$-Werte müssen mit endlicher Genauigkeit zwischen verschiedenen Signalverarbeitungseinheiten zur digitalen Verarbeitung übermittelt werden. Der dazu notwendige Quantisierungsschritt verursacht unvermeidbares Quantisierungsrauschen, welches mit einem Informationsverlust in dem Verarbeitungssystem gleichgesetzt werden kann. Im Allgemeinen bildet eine skalare Quantisierung kontinuierliche $L$-Werte auf einen begrenzten Satz von $R$ diskreten Werten $r_i$ ab, welche als Quantisierungswerte, Quantisierungslevel oder Rekonstruktionsniveaus bezeichnet werden. Zu diesem Zweck werden $D$ (= $R$ + 1) Schwellwerte oder Entscheidungsniveaus $d_i$ in dem Wertebereich $\pm\infty$ der $L$-Werte festgelegt. Ein $L$-Wert in einem Intervall $[d_i, d_{i+1})$ wird auf das entsprechende Rekonstruktionsniveau $r_i$ abgebildet. Im Folgenden werden die Bezeichnungen Rekonstruktionsniveau und Entscheidungsniveau verwendet.

Durch ein Erhöhen der Anzahl $R$ der Rekonstruktionsniveaus $r_i$ wird der Informationsverlust auf Kosten eines zusätzlichen Datentransfer- und Verarbeitungsaufwands reduziert. Aus diesem Grund ist die Anzahl $R$ von Rekonstruktionsniveaus $r_i$ begrenzt. Eine weitere Reduzierung des Informationsverlustes ist durch eine geeignete Festlegung der Rekonstruktionsniveaus $r_i$ und der Entscheidungsniveaus $d_i$ möglich. Andererseits ermöglicht eine adäquate Quantisierung eine vorteilhafte Reduktion der Datenrate.

Bei einer bimodalen Gauß-Verteilung der $L$-Werte führt eine uniforme Quantisierung mit gleichmäßigen Intervallen $[d_i, d_{i+1}]$ und Rekonstruktionsniveaus $r_i$ in der Mitte dieser Intervalle zu erheblichen Fehlern bzw. einem hohen Quantisierungsrauschen. Viele verschiedene $L$-Werte werden auf Rekonstruktionsniveaus $r_i$ weniger Intervalle abgebildet, während andere Rekonstruktionsniveaus $r_i$ nur selten verwendet werden. Dabei werden insbesondere eine Wahrscheinlichkeitsverteilung der $L$-Werte und ein Informationsgehalt der $L$-Werte nicht berücksichtigt. Die Quantisierungsfehler setzten sich besonders bei einer iterativen Signalverarbeitung fort und wirken sich negativ auf den gesamten Signalverarbeitungsprozess aus.

Ein bekanntes nicht uniformes Quantisierungsverfahren für skalare Größen ist die Lloyd-Max-Quantisierung nach S. Lloyd, "Least squares quantization in PCM," (unpubl. Bell Lab. Techn. Note, 1957) IEEE Trans. Inf. Theory, vol. IT-28, pp. 129 -137, 1982 und J. Max, "Quantizing for minimum distortion", IEEE Trans. Inf. Theory, vol. 6, pp. 7-12, 1960. Bei dieser Quantisierung wird der mittlere quadratische Fehler (MSE: Mean Square Error) zwischen den Wahrscheinlichkeitsdichten kontinuierlicher und quantisierter Werte minimiert. Dazu werden in mehreren iterativen Schritten die Entscheidungsniveaus $d_i$ und die Rekonstruktionsniveaus $r_i$ entsprechend angepasst. Bei Log-Likelihood-Quotienten führt diese Vorgehensweise nachteilhaft dazu, dass viele Niveaus für L-Werte mit großen Beträgen verwendet werden, um den mittleren quadratischen Fehler klein zu halten, obwohl eine Änderung der Zuverlässigkeit bei diesen $L$-Werten bereits sehr klein ist.

In der Druckschrift S. Khattak, W. Rave and G. Fettweis, "Distributed Iterative Multiuser Detection through Base Station Cooperation", EURASIP J. on Wireless Comm. and Networking Volume 2008, Article ID 390489 wird eine weitere nicht uniforme Quantisierung für Log-Likelihood-Quotienten beschrieben. Zum Darstellen der L-Werte werden sogenannte "Soft-Bits" A(X) = E{X} = tanh(L(X)/2) verwendet. Durch diese Transformation wird der Wertebereich auf [-1, 1] eingeschränkt und eine Sättigung bei wachsender Zuverlässigkeit bzw. großem Betrag der L-Werte erreicht. Die Lloyd-Max-Quantisierung wird nun auf einen Ausdruck für die "Soft-Bit"-Dichte zur Bestimmung geeigneter Entscheidungsniveaus $d_i$ und Rekonstruktionsniveaus $r_i$ angewendet. Durch diese Maßnahme werden die Niveaus $d_i$ und $r_i$ besser an eine vorhandene Verteilung und einen Informationsgehalt der $L$-Werte angepasst.

Es besteht jedoch weiterhin ein Bedarf nach einem optimaleren Quantisierungsverfahren von Log-Likelihood-Quotienten um Fehler in der Signalverarbeitung und den Arbeitsaufwand zu minimieren. Insbesondere ist der mittleren quadratischen Fehler zwischen kontinuierlichen und quantisierten Log-Likelihood-Quotienten für eine Bestimmung von Entscheidungsniveaus $d_i$ und Rekonstruktionsniveaus $r_i$ kein optimales Kriterium.

## Offenbarung der Erfindung

Aufgabe der Erfindung ist es daher, Nachteile des Standes der Technik zu vermeiden und eine gegenseitige Abstimmung von Datenrate und Genauigkeit bei einer Quantisierung von Likelihood-Quotienten für eine Übermittlung zu optimieren.

Erfindungsgemäß wird die Aufgabe mit einem Verfähren entsprechend Anspruch 1 gelöst. Weiterhin wird die Aufgabe mit einer Quantisierungseinrichtung entsprechend Anspruch 6 gelöst.

Die gegenseitige Information zwischen den binären Variablen und den quantisierten Likelihood-Quotienten lässt sich bei einer vorgegebenen Wahrscheinlichkeitsverteilung oder Wahrscheinlichkeitsdichte als Funktion der Rekonstruktions- und Entscheidungsniveaus darstellen. Erfindungsgemäß wird die gegenseitige Information vor einer Quantisierung der Likelihood-Quotienten durch Variieren der Rekonstruktions- und Entscheidungsniveaus maximiert. Dazu kann beispielsweise ein Verfahren des steilsten Abstiegs oder ein anderes geeignetes numerisches Optimierungsverfahren angewendet werden. Die optimierten Niveaus werden anschließend zum Quantisieren der Likelihood-Quotienten benutzt.

Durch eine solche direkte Optimierung der Rekonstruktions- und Entscheidungsniveaus bezüglich der maximalen gegenseitigen Information nach dem erfindungsgemäßen Verfahren und der erfindungsgemäßen Einrichtung wird ein Verlust an gegenseitiger Information bei der Quantisierung minimiert. Bei einer Übermittlung von quantisierten Likelihood-Quotienten zwischen Signalverarbeitungseinheiten tritt daher vorteilhaft weniger Quantisierungsrauschen auf. Bei gleichbleibender Datenrate einer Übermittlung ist der Verlust an gegenseitiger Information kleiner und ein Signalverarbeitungsprozess wird wesentlich genauer durchgeführt. Andererseits ist eine Reduzierung der Datenrate durch weniger Niveaus bei gleichem Verlust an gegenseitiger Information möglich, wodurch eine Signalverarbeitung schneller und mit weniger Aufwand betreibbar ist.

Eine vorteilhafte Ausbildung des erfindungsgemäßen Verfahrens bei einer Signalverarbeitung zur Quantisierung von Likelihood-Quotienten wird durch ein Erfassen einer Varianz der Likelihood-Quotienten vor einer Quantisierung für das Ermitteln von Entscheidungsniveaus und Rekonstruktionsniveaus erzielt. Die Varianz eignet sich z.B. bei einer bimodalen Gaus-Verteilung, wie sie bei AWGN-Kanälen oder flachen Rayleigh-Kanäle auftritt, zur Beschreibung der Wahrscheinlichkeitsverteilung bzw. Wahrscheinlichkeitsdichte der Likelihood-Quotienten. Für eine Quantisierung lassen sich somit optimal an eine jeweils gegebene Varianz der Likelihood-Quotienten angepasste Rekonstruktions- und Entscheidungsniveaus ermitteln. Der Verlust an gegenseitiger Information durch eine Quantisierung wird jeweils entsprechend einer vorliegenden Varianz minimiert.

Eine weitere bevorzugte Ausgestaltung des erfindungsgemäßen Verfahrens sieht ein Anpassen einer Näherungsfunktion als Funktion der Varianz an ermittelte Rekonstruktionsniveaus oder Entscheidungsniveaus bei verschiedenen Varianzen und ein Ermitteln von Rekonstruktionsniveaus und Entscheidungsniveaus bei einer Quantisierung durch die Näherungsfunktion vor. Dabei wird beispielsweise für ein, mehrere oder alle Rekonstruktions- und Entscheidungsniveaus jeweils eine entsprechende Näherungsfunktion verwendet. Durch diese Maßnahme wird eine schnelle und unkomplizierte Bestimmung optimaler Niveaus in Abhängigkeit einer vorgegebenen Varianz ermöglicht. Eine zeitaufwendige und umständliche Maximierung der gegenseitigen Information durch ein geeignetes Optimierungsverfahren muss nicht vor jeder Quantisierung durchgeführt werden.

Vorzugsweise werden bei einer Ausgestaltung des erfindungsgemäßen Verfahrens eine Wertetabelle und/oder eine Interpolation beim Ermitteln von Rekonstruktionsniveaus oder Entscheidungsniveaus verwendet. Dieses ist z.B. zusätzlich oder alternativ zu einer Näherungsfunktion möglich. Auf diese Weise wird ebenfalls eine Bestimmung optimaler Niveaus im Sinne maximaler gegenseitiger Information schnell und ohne aufwendige Optimierungsverfahren vor einer Quantisierung durchführbar.

Ferner wird in einer vorteilhaften Ausbildung des erfindungsgemäßen Verfahrens eine Entropiekodierung von Rekonstruktionsniveaus durchgeführt. Bei einer Quantisierung mit Maximierung der gegenseitigen Information ergeben sich Rekonstruktionsniveaus, welche mit unterschiedlicher Wahrscheinlichkeit benutzt werden. Durch eine Entropiekodierung werden den Rekonstruktionsniveaus Niveaubezeichner bzw. Bitmustern von unterschiedlicher Länge zugeordnet. Dabei wird ein präfixfreier Code verwendet und häufiger auftretende Rekonstruktionsniveaus erhalten einen kürzeren Niveaubezeichner. Als Entropiekodierung wird beispielsweise eine Huffman-Kodierung verwendet. Hierdurch wird eine Datenkompression bei zu übermittelnden Rekonstruktionsniveaus erreicht. Dies führt zu einer wirkungsvollen Reduzierung einer Datenrate bei einer Übermittlung von quantisierten Likelihood-Quotienten.

Eine vorteilhafte Ausbildung der erfindungsgemäßen Quantisierungseinrichtung bei einer Signalverarbeitung zum Quantisierung von Likelihood-Quotienten wird dadurch erreicht, dass Approximationsmittel zum Anpassen einer Näherungsfunktion als Funktion der Varianz an ermittelte Rekonstruktionsniveaus oder Entscheidungsniveaus bei verschiedenen Varianzen und ein Niveaugenerator zum Ermitteln von Rekonstruktionsniveaus und Entscheidungsniveaus bei einer Quantisierung mit der Näherungsfunktion vorgesehen sind. Wie bei der korrespondierenden Ausbildung des erfindungsgemäßen Verfahrens wird hierdurch eine zeit- und ressourcenaufwendige Maximierung der gegenseitigen Information durch ein Optimierungsverfahren vermieden. Optimale Niveaus in Abhängigkeit einer vorgegebenen Varianz werden schnell und unkompliziert ermittelt.

Weitere Ausgestaltungen der erfindungsgemäßen Quantisierungseinrichtung korrespondieren jeweils mit einer bereits beschriebenen Ausbildung des erfindungsgemäßen Verfahrens und verfügen über entsprechende Vorteile, die sich

aus dem Gegenstand der Unteransprüche ergeben.

Ein Ausführungsbeispiel der Erfindung ist nachstehend unter Bezugnahme auf die zugehörigen Zeichnungen näher erläutert.

## Kurze Beschreibung der Zeichnungen

Fig. 1     zeigt in einem schematischen Flussdiagramm ein Ausführungsbeispiel des erfindungsgemäßen Verfahrens.

Fig. 2     zeigt einen Vergleich von Rekonstruktionsniveaus $r_i$ und Entscheidungsniveaus $d_i$ für $R = 5$ Rekonstruktionsniveaus, welche nach einem Verfahren zur Maximierung der gegenseitigen Information, einem direkt auf die *L*-Werte angewandtem Max-Lloyd-Verfahren und einem auf "Soft-Bits" der *L*-Werte angewandtem Max-Lloyd-Verfahren optimiert sind.

Fig. 3    zeigt einen Vergleich des Verlusts an gegenseitiger Information Δ *I* zwischen quantisierten L-Werten und nicht quantisierten *L*-Werten als Funktion der mittleren gegenseitigen Information $I_C$ für *R* = 2 - 8 Rekonstruktionsniveaus. Dabei werden Quantisierungen mit Maximierung der gegenseitigen Information mit einer direkten Quantisierung der *L*-Werte und einer Quantisierung von "Soft-Bits" der *L*-Werte jeweils nach einem Lloyd-Max-Verfahren verglichen.

Fig. 4    zeigt eine Tabelle mit angepassten Koeffizienten *a, b* und *c* der Näherungsfunktion

$$f(\sigma_L) = a\sqrt{\sigma_L} + b\sigma_L + c\sigma_L^3$$

für Rekonstruktionsniveaus und Entscheidungsniveaus bei *R* = 2, 3, 4, 5, 6, 8 Rekonstruktionsniveaus.

Fig. 5    zeigt Bitfehlerraten einer Log-MAP-Dekodierung eines PCC-Codes (*G* = [1,5/7], Blocklänge *N* = 2000, AWGN-Kanal) bei Verwendung einer Quantisierung durch Maximierung der gegenseitigen Information im Vergleich mit einer Verwendung einer direkten *L*-Wert-Quantisierung nach Lloyd-Max.

Fig. 6    zeigt die Entropie von *L*-Werten, welche mit Maximierung der gegenseitigen Information $L_q(X;L)$ quantisiert sind, als eine Funktion von $\sigma^2_L$ (durchgezogene Linien) und eine mit einer drei-dimensionalen Huffman-Kodierung erreichbare mittlere Bezeichnerlänge (Stufen).

## Bevorzugtes Ausführungsbeispiel

Im Folgenden werden zunächst mathematische Grundlagen und Ausdrücke näher erklärt und anschließend ein beispielhaftes Verfahren zur Quantisierung von Likelihood-Quotienten zusammen mit einer korrespondierenden Quantisierungseinrichtung beschrieben.

Gegenseitige Information oder Transinformation ist eine dem Fachmann bekannte Größe aus der Informationstheorie, die die Stärke des statistischen Zusammenhangs zweier Zufallsgrößen angibt. Die gegenseitige Information *1(X; L)* zwischen zwei Variablen *x* und *I* beschreibt die mittlere Reduzierung der Unsicherheit von *x*, wenn *I* bekannt ist und umgekehrt. Dieses wird beispielsweise in Thomas M. Cover, Joy A. Thomas, "Elements of Information Theory" 2nd Ed., John Wiley & Sons, 2006 beschrieben. Die gegenseitige Information wird hier zum Bestimmen des mittleren Informationsverlustes von binären Daten bei einer Quantisierung von zugehörigen *L*-Werten benutzt. Mit einem vorgegebenen Satz von Rekonstruktionsniveaus $r_i$ und Entscheidungsniveaus $d_i$ ist die gegenseitige Information *1(X; L)* zwischen der binären Variablen $X \in \{+1, -1\}$ und der zugehörigen quantisierten, diskreten *L*-Wert-Dichte sowie der nicht quantisierten, kontinuierlichen *L*-Wert-Dichte berechenbar. Die gegenseitige Information für eine kontinuierliche Dichte lautet:

$$I_C(X;L) = \sum_{x=\pm 1} \int \frac{p(l|x)}{2} \operatorname{ld} \frac{2p(l|x)}{p(l|x=1) + p(l|x=-1)} dl$$

Für einen gaußschen Kanal ist die Integration für den quantisierten, diskreten Fall durchführbar. Die gegenseitige Information zwischen *X* und dem zugehörigen quantisierten Log-Likelihood-Quotienten kann mit ausgeschriebener Summe über beide möglichen Bitwerte des Informationsbits $X \in \{+1, -1\}$ dargestellt werden als:

$$I_q(X;L) = \frac{1}{4}\sum_{i=1}^{R}[1 - \mathrm{ld}(1 + e^{-r_i})]\,\mathrm{erf}\left(\frac{l - \mu_L}{\sqrt{2}\sigma_L}\right)\Bigg|_{d_i}^{d_{i+1}} \cdots$$

$$+ [1 - \mathrm{ld}(1 + e^{r_i})]\,\mathrm{erf}\left(\frac{l + \mu_L}{\sqrt{2}\sigma_L}\right)\Bigg|_{d_i}^{d_{i+1}}$$

Statt der Fehlerfunktion erf($x$) kann auch die Standardnormalverteilung verwendet werden. Mit "ld" wird der Logarithmus zur Basis 2 bezeichnet. Mit $\mu_L = \sigma_L^2/2$ beschreibt diese Gleichung bei vorgegebener Anzahl $R$ von Rekonstruktionsniveaus und vorgegebener Varianz $\sigma_L^2$ oder Standardabweichung $\mu_L$ der L-Werte die gegenseitige Information $I_q(X;L)$ in Abhängigkeit von den Rekonstruktionsniveaus $r_i$ und Entscheidungsniveaus $d_i$.

Die Differenz $\Delta I = I_c - I_q$ zwischen den beiden gegenseitigen Informationen stellt den Informationsverlust durch die Quantisierung dar. Die Ableitungen nach den Rekonstruktionsniveaus $r_i$ für $1 \le i \le R$ lauten:

$$\frac{\partial I_q}{\partial r_i} = \frac{1}{4\ln 2}\frac{e^{-r_i}}{1 + e^{-r_i}}\,\mathrm{erf}\left(\frac{l - \mu_L}{\sqrt{2}\sigma_L}\right)\Bigg|_{d_i}^{d_{i+1}} - \frac{1}{4\ln 2}\frac{e^{r_i}}{1 + e^{r_i}}\,\mathrm{erf}\left(\frac{l + \mu_L}{\sqrt{2}\sigma_L}\right)\Bigg|_{d_i}^{d_{i+1}}$$

Die Ableitungen nach den Entscheidungsniveaus $d_i$ für $1 \le i \le R+1$ 1 lauten:

$$\frac{\partial I_q}{\partial d_i} = \frac{1}{2\sqrt{2\pi}\sigma_L}\mathrm{ld}\frac{1 + e^{-r_i}}{1 + e^{-r_{i-1}}}\exp\left(-\frac{(d_i - \mu_L)^2}{2\sigma_L^2}\right)\cdots$$

$$+ \frac{1}{2\sqrt{2\pi}\sigma_L}\mathrm{ld}\frac{1 + e^{r_i}}{1 + e^{r_{i-1}}}\exp\left(-\frac{(d_i + \mu_L)^2}{2\sigma_L^2}\right)$$

Zur Minimierung des Informationsverlusts $\Delta I$ muss die gegenseitige Information $I_q$ der quantisierten $L$-Wert-Dichte maximiert werden. Bei einer vorgegebenen Varianz $\sigma_L^2$ und einer vorgegebenen Anzahl $R$ von Rekonstruktionsniveaus wird eine Maximierung der gegenseitigen Information $I_q$ durch entsprechendes Anpassen der Rekonstruktions-niveaus $r_i$ und Entscheidungsniveaus $d_i$ erzielt.

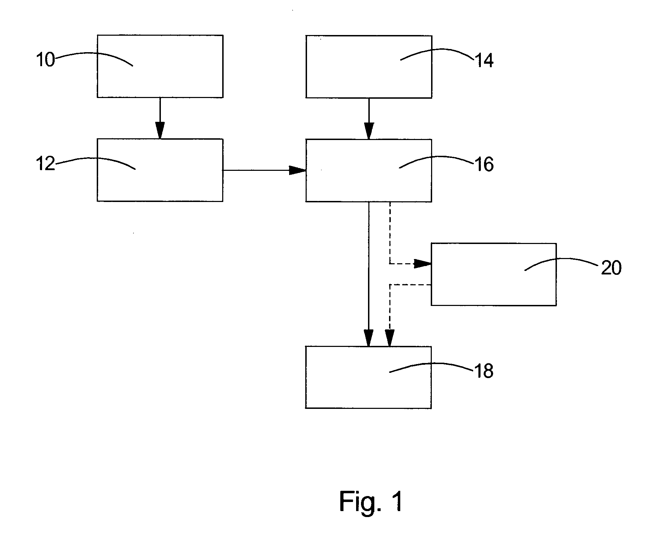

Fig. 1 zeigt ein schematisches Flussdiagramm eines Ausführungsbeispiels. In einem ersten Verfahrensschritt wird ein Verfahren des steilsten Abstiegs oder ein anderes geeignetes numerisches Optimierungsverfahren zur Maximierung der gegenseitigen Information $I_q$ verwendet, Rechteck 10. Dazu sind in einer korrespondierenden Quantisierungseinrichtung Mittel zum Ermitteln von Rekonstruktions- und Entscheidungsniveaus durch Maximierung der gegenseitigen Information vorgesehen. Durch die Maximierung der gegenseitigen Information $I_q$ ergeben sich hinsichtlich eines minimalen Informationsverlustes $\Delta I$ optimierte Rekonstruktionsniveaus $r_i$ und Entscheidungsniveaus $d_i$.

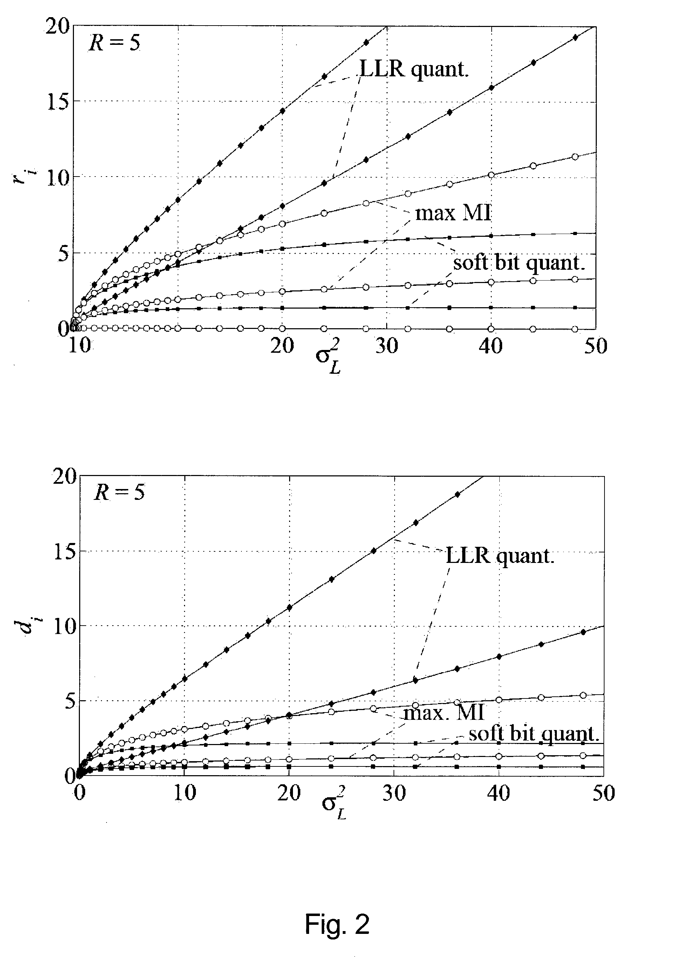

In den Diagrammen der Fig. 2 werden durch eine solche Maximierung ermittelte Rekonstruktionsniveaus $r_i$ und

Entscheidungsniveaus $d_i$ beispielhaft für $R = 5$ und einige Varianzen $\sigma_L^2$ als hohle Punkte (°) dargestellt und mit "max MI" für "Maximum Mutual Information" bezeichnet. Bei $R = 5$ Rekonstruktionsniveaus haben die Entscheidungsniveaus $d_1$ und $d_{R+1}$ die Werte $\pm\infty$, während die übrigen vier Entscheidungsniveaus endliche Werte haben. Aus Symmetriegründen treten sowohl bei den Rekonstruktionsniveaus als auch bei den Entscheidungsniveaus zwei Paare von Niveaus auf, deren Werte sich nur durch das Vorzeichen unterscheiden. In Fig. 2 sind daher nur positive Niveaus dargestellt. Ferner ist bei $R = 5$ ein Rekonstruktionsniveau unabhängig von der $L$-Wert-Varianz stets gleich Null. Zum Vergleich sind in Fig. 2 entsprechende Rekonstruktionsniveaus und Entscheidungsniveaus nach einer direkten Lloyd-Max-Quantisierung der $L$-Werte (LLR quant.) und einer Lloyd-Max-Quantisierung von "Soft-Bits" (soft bit quant.) aufgezeigt.

Deutlich erkennbar ist in Fig. 2 eine zu erwartende Sättigung der Niveaus nach der Soft-Bit-Quantisierung mit wachsender Varianz $\sigma_L^2$ und somit größerem Betrag der $L$-Werte. Dies ist bei der Maximierung der gegenseitigen Information weniger stark ausgeprägt. Neben der vorteilhaften Optimierung der Niveaus direkt durch den nichtlinearen Ausdruck für die gegenseitige Information ergibt sich bei dieser Quantisierung durch eine unabhängige Optimierung der Entscheidungsniveaus ein neuer nutzbarer Freiheitsgrad. Die Entscheidungsniveaus müssen nicht mehr in der Mitte zwischen zwei Rekonstruktionsniveaus liegen. Hierdurch wird eine wesentliche Reduzierung des Verlusts an gegenseitige Information bei der Quantisierung erzielt.

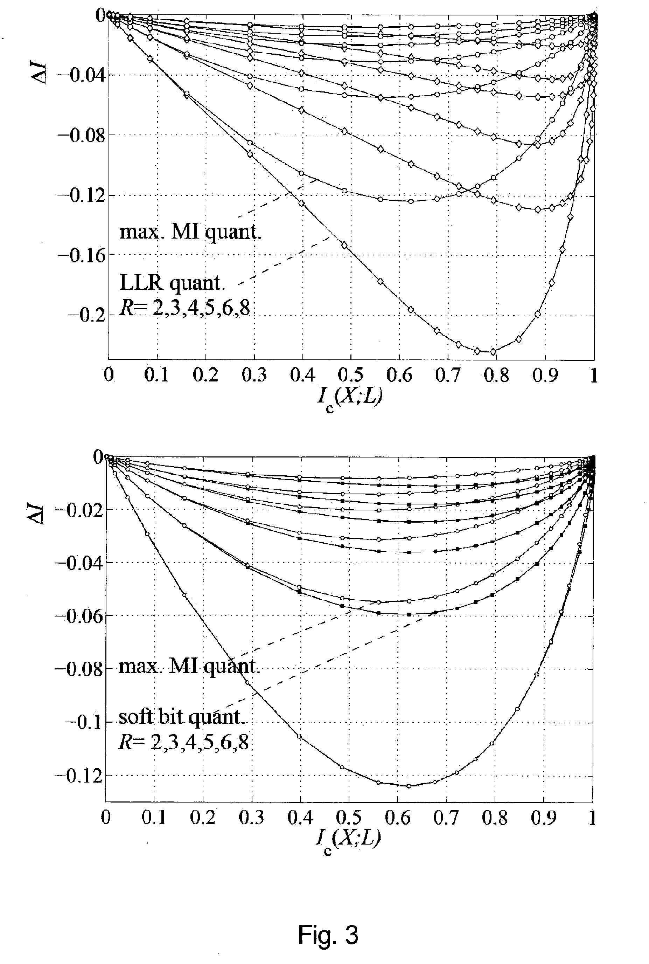

In Fig. 3 wird die Minderung an gegenseitiger Information $\Delta I$ zwischen quantisierten und nicht quantisierten $L$-Werten als Funktion der mittleren gegenseitigen Information der $L$-Werte für $R = 2, 3, 4, 5, 6, 8$ Rekonstruktionsniveaus gezeigt. In einem Diagramm wird die Quantisierung durch Maximierung der gegenseitigen Information (max. MI quant.) mit der direkten Quantisierung der $L$-Werte (LLR quant.) verglichen. Deutlich ist die große Reduzierung des Verlusts an gegenseitiger Information zu erkennen, wenn die LLR basierte Quantisierung durch die Maximierung der gegenseitigen Information ersetzt wird. Die Reduzierung nimmt mit wachsender Anzahl $R$ von Niveaus ab. Das andere Diagramm der Fig. 3 vergleicht die Quantisierung durch Maximierung der gegenseitigen Information (max. MI quant.) mit der "Soft-Bit"-Quantisierung (soft bit quant.). Durch die "Soft-Bit"-Quantisierung ist bereits eine deutliche Reduzierung der Minderung an gegenseitiger Information gegenüber der direkten LLR-Quantisierung erreichbar. Bei einem Vergleich der beiden Diagramme ist die unterschiedliche Skalierung der Y-Achse zu beachten. Gleichwohl wird durch die Quantisierung mittels Maximierung der gegenseitigen Information der Verlust an gegenseitiger Information gegenüber "Soft-Bit"-Quantisierung nochmals um bis zu ¼ verringert. Dies ist insbesondere auf die separate Optimierung der Entscheidungsniveaus zurückzuführen, wie aus dem Fall $R = 2$ ersichtlich ist. Bei $R = 2$ ist dieser zusätzliche Freiheitsgrad noch nicht gegeben, wodurch die beiden Quantisierungsverfahren im Wesentlichen gleichwertig sind.

In einem weiteren Verfahrensschritt, Rechteck 12, wird eine geeignete Näherungsfunktion der Varianz $\sigma_L^2$ oder der Standardabweichung $\sigma_L$ an einige durch Maximierung der gegenseitigen Information bestimmte Werte eines Rekonstruktionsniveaus $r_i$ oder Entscheidungsniveaus $d_i$ für verschiedene Varianzen $\sigma_L^2$ angepasst. Hierzu stehen der Quantisierungseinrichtung Approximationsmittel zur Verfügung. Als Näherungsfunktion wird für alle Niveaus in diesem Ausführungsbeispiel $f(\sigma_L) = a\sqrt{\sigma_L} + b\sigma_L + c\sigma_L^2$ verwendet. In Fig. 2 sind für zwei Rekonstruktionsniveaus und zwei Entscheidungsniveaus entsprechend angepasste Funktionen $f(\sigma_L)$ als Linien dargestellt. Bei einer Anpassung werden geeignete Koeffizienten $a$, $b$ und $c$ für ein Niveau bestimmt. Bei einer vorgegebenen Anzahl $R$ von Rekonstruktionsniveaus und $R+1$ Entscheidungsniveaus ist eine Bestimmung der Koeffizienten $a$, $b$ und $c$ wegen der Symmetrie nicht für jedes Niveau notwendig. Vielmehr halbiert sich die Anzahl notwendiger Anpassungen. Ferner gilt $d_1 = -\infty$, $d_{R+1} = +\infty$, $r_{(R+1)/2} = 0$ für ungerade $R$ und $d_{R/2+1} = 0$ für gerade $R$ unabhängig von der Varianz $\sigma_L^2$.

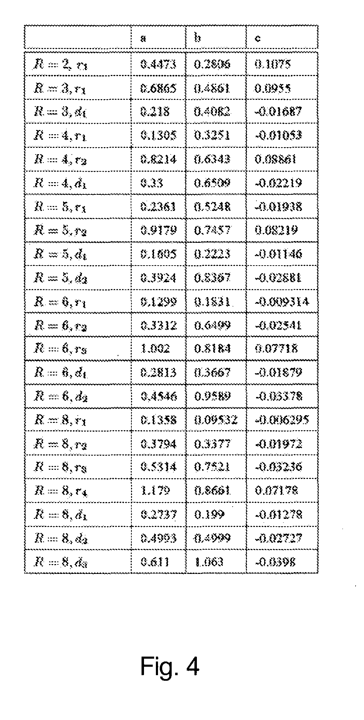

In der Tabelle der Fig. 4 werden alle notwendigen Koeffizienten $a$, $b$ und $c$ für $R = 2, 3, 4, 5, 6, 8$ Rekonstruktionsniveaus aufgezeigt. Mit Hilfe der Näherungsfunktionen für jedes Rekonstruktions- und Entscheidungsniveau wird eine schnelle und unkomplizierte Bestimmung optimaler Niveaus in Abhängigkeit einer vorgegebenen Varianz $\sigma_L^2$ ermöglicht. Eine zeitaufwendige und umständliche Maximierung der gegenseitige Information $I_q$ durch ein geeignetes numerisches Optimierungsverfahren, z.B. ein Verfahren des steilsten Abstiegs, muss nicht vor jeder Quantisierung durchgeführt werden.

In einer alternativen Ausführung ist statt der Näherungsfunktion $f(\sigma_2)$ mit entsprechenden Koeffizienten eine Verwendung einer Wertetabelle für alle Rekonstruktions- und Entscheidungsniveaus für möglichst viele verschiedene Varianzen $\sigma_L^2$ und eine geeignete Interpolation vorgesehen. Auch auf diese Weise ist eine Bestimmung optimaler Niveaus im Sinne maximaler gegenseitiger Information und in Abhängigkeit von $\sigma_L^2$ schnell und ohne aufwendige Optimierungsverfahren vor einer Quantisierung durchführbar.

Vor einer Quantisierung von $L$-Werten wird zunächst die Varianz $\sigma_L^2$ oder die Standardabweichung $\sigma_L$ der $L$-Werte mit einer Erfassungseinheit ermittelt, Rechteck 14. Mit Hilfe der Näherungsfunktion $f(\sigma_2)$ und den entsprechenden Koeffizienten $a$, $b$ und $c$ werden dann abhängig von $\sigma_L^2$ oder $\sigma_L$ optimale Rekonstruktionsniveaus $r_i$ und Entscheidungsniveaus $d_i$ bezüglich der gegenseitigen Information durch einen Niveaugenerator festgelegt, Rechteck 16. Schließlich erfolgt eine Quantisierung, Rechteck 18, der $L$-Werte mit Benutzung dieser Rekonstruktionsniveaus $r_i$ und Entscheidungsniveaus $d_i$ durch eine Quantisierungseinheit. Die Verfahrensschritte 14, 16 und 18 werden beispielsweise bei einer iterativen Signalverarbeitung bei jeder anfallenden Quantisierung von $L$-Werten erneut durchgeführt.

Im Folgenden werden diese Verfahrensschritte beispielhaft anhand einer Turbo-Decodierung eines parallelen verketteten Faltungscodes (PCCC: parallel concatenated convolutional code) verdeutlicht. Dabei wird zum Vergleich auch eine direkte Quantisierung von $L$-Werten nach Lloyd-Max verwendet und der Einfluss eines Quantisierungsverfahrens für $L$-Werte auf einen Signalverarbeitungsprozess aufgezeigt.

Als PCC-Code wird ein einfacher rekursiver systematischer PCCC mit Generatoren $G$ = [1,5/7], Blocklänge $N$ = 2000 und einem Zufalls-Interleaver mit Punktierung zum erzielen einer Rate ½ verwendet. Ein solcher Code ist dem Fachmann beispielweise aus Thomas M. Cover, Joy A. Thomas, "Elements of Information Theory" 2nd Ed., John Wiley & Sons, 2006 bekannt. Zur Decodierung wird ein BCJR-Algorithmus verwendet, wobei die Maximum-Log-MAP-Approximation (MAP: Maximum A posteriori Probability) im Wesentlichen zu gleichen Ergebnissen führt wie die exakte Log-MAP-Version. Hierbei wird die an einem Decoderausgang vorliegende extrinsische Information zwischen zwei kooperierenden Decodern ausgetauscht. Dazu ist eine Quantisierung der L-Werte der extrinsischen Information notwendig.

Zunächst wird die Varianz der $L$-Werte adaptiv an dem MAP-Decoderausgang mit dem Erfassungsmittel ermittelt. Dabei wird die gemessene Varianz von $|L(X)|$, den absoluten L-Wert der Codebits, auf die Varianz $\sigma_L^2$ abgebildet. Mit Hilfe der Nährungsfunktion und den jeweils gültigen Koeffizienten $a$, $b$ und $c$ (s. Fig. 3) werden anschließend aus der ermittelten Varianz $\sigma_L^2$ Rekonstruktionsniveaus $r_i$ und Entscheidungsniveaus $d_i$ bestimmt. Dazu wird bei der Quantisierungseinrichtung der Niveaugenerator verwendet. Die bestimmten Niveaus sind somit zur Maximierung der gegenseitigen Information abhängig von der Varianz optimiert. Abschließend erfolgt eine Quantisierung der $L$-Werte mit den ermittelten Rekonstruktionsniveaus $r_i$ und Entscheidungsniveaus $d_i$ durch die Quantisierungseinheit. Diese Vorgehensweise wird bei jeder Decodierungsiteration angewendet. Bei Varianzen größer als $\sigma_L^2 = 100$ werden die Niveaus für diesen Wert benutzt und die gegenwärtige $L$-Wert-Verteilung wird zum Erhalten von Information über den relativen Betrag zwischen den L-Werten entsprechend skaliert. An dieser Stelle ist auch ein Abbrechen der Iteration möglich.

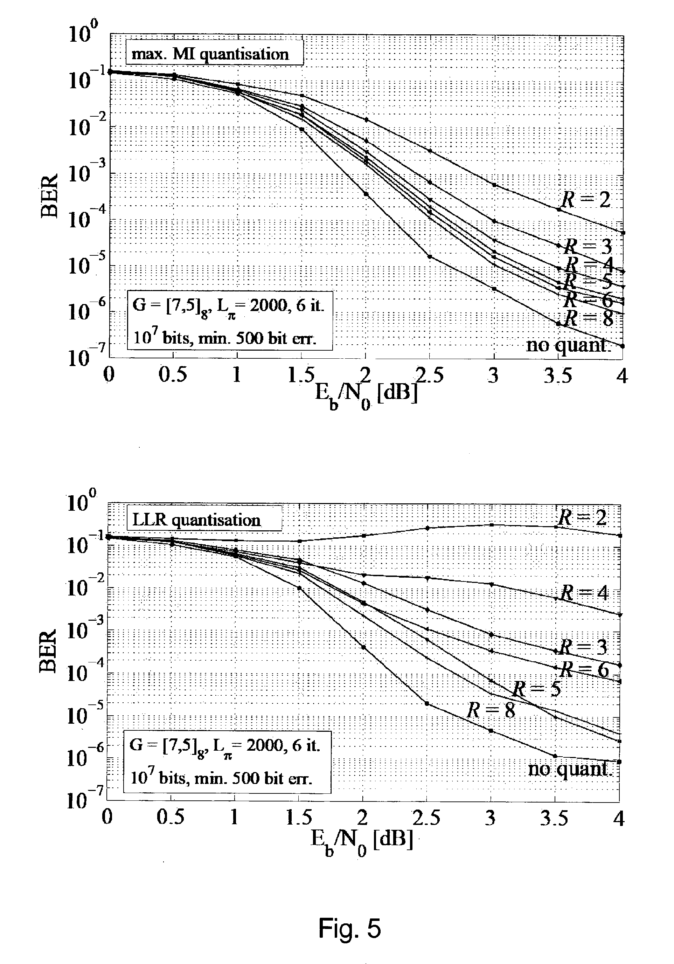

Zum Vergleich werden Decodierungen mit unterschiedlichen $R$ (Anzahl der Rekonstruktionsniveaus) bei der Quantisierung durchgeführt und statt der Quantisierung mittels Maximierung der gegenseitigen Information auch eine direkte Quantisierung der $L$-Werte nach dem Lloyd-Max-Verfahren vorgenommen. In Fig. 5 wird die Bitfehlerhäufigkeit (BER: bit error rate) der einzelnen Decodierungen als Funktion des Bitenergie-Rauschleistungsdichte-Verhältnisses $E_b/N_0$ dargestellt. Das Verhältnis von der für ein Informationsbit aufgewendete Energie $E_b$ zu der spektralen Rauschleistungsdichte $N_0$ bezieht das Signal-Rauschverhältnis auf ein Informationsbit. Mit steigendem Rauschen, d. h. abnehmendem $E_b/N_0$ steigt üblicherweise die Bitfehlerrate. In dem oberen Diagramm sind die Bitfehlerraten für verschiedene $R$ und $E_b/N_0$ bei Verwendung der Quantisierung mit Maximierung der gegenseitigen Information (max. MI quantisation) dargestellt. Deutlich ist die Abnahme der Bitfehlerrate mit wachsendem $R$ zu erkennen. Als Referenz (no quant.) wird die nicht quantisierte Repräsentation der a priori Information verwendet. Das untere Diagramm zeigt Bitfehlerraten für entsprechende $R$ und $E_b/N_0$ bei einer Verwendung der direkten Lloyd-Max-Quantisierung für die $L$-Werte. Diese Quantisierung führt allgemein zu einer größeren Bitfehlerrate als die Max-MI-Quantisierung.

In einem weiteren Ausführungsbeispiel wird zusätzlich eine Entropiekodierung, Rechteck 20, der Rekonstruktionsniveaus mittels eines Entropiekodierers der Quantisierungseinrichtung durchgeführt. Entropiekodierungen sind dem Fachmann beispielsweise aus A. Gersho, R. M. Gray, "Vector Quantization and Signal Compression," Boston, MA, Kluwer, 1992 und Thomas M. Cover, Joy A. Thomas, "Elements of Information Theory" 2nd Ed., John Wiley & Sons, 2006 bekannt. Die Quantisierung zur Maximierung der gegenseitigen Information wie auch die "Soft-Bit"-Quantisierung liefern Rekonstruktionsniveaus, welche mit unterschiedlicher Wahrscheinlichkeit benutzt werden. Die Flächen unter der bimodalen gaußschen Dichte für jeweils ein Rekonstruktionsniveau sind unterschiedlich. Den Rekonstruktionsniveaus werden Niveaubezeichner bzw. Bitmustern von unterschiedlicher Länge zugeordnet. Dabei wird ein präfixfreier Code verwendet und häufiger verwendete Rekonstruktionsniveaus erhalten einen kürzeren Niveaubezeichner. Auf diese Weise wird eine Datenkompression und folglich eine effektive Reduzierung der Datenrate erzielt.

Eine untere Grenze der notwendigen mittleren Bezeichnerlänge ist durch die Entropie der Rekonstruktionsniveaus gegeben:

$$H_R(L_q) = -\sum_{i=1}^{R} P_i \log P_i + (1 - P_i) \log (1 - P_i)$$

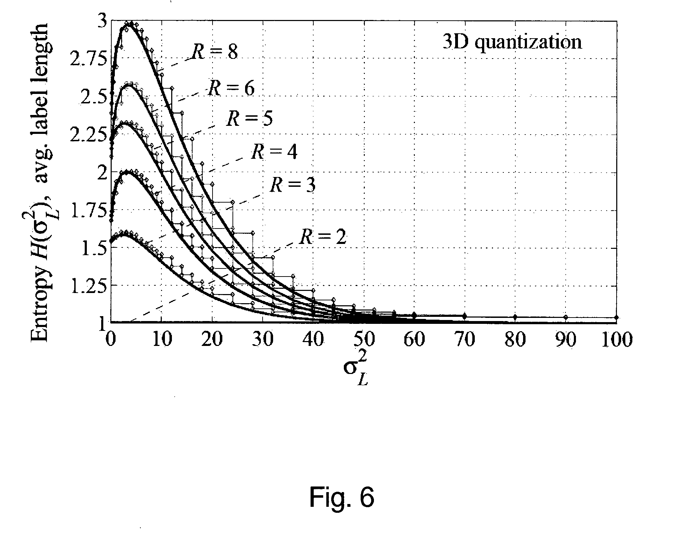

In Fig. 6 wird $H_R(L_q)$ als Funktion der Varianz $\sigma_L^2$ für verschieden $R$ (Anzahl der Rekonstruktionsniveaus) mit durchgezogenen Linien dargestellt. Die Entropiekodierung wird z.B. durch eine dreidimensionale Huffman-Kodierung durchgeführt. Dabei werden drei $L$-Werte gemeinsam im Sinne einer Vektorquantisierung repräsentiert. Die mittlere Bezeichnerlänge ist für verschiedene $R$ und $\sigma_L^2$ in Fig. 6 jeweils als Treppenfunktion über der Entropiekurve dargestellt. Es ist aber auch eine Verwendung einer anderen Dimension oder eines anderen Kodierverfahren möglich. Als Beispiel wird hier eine Quantisierung der bimodalen gaußschen $L$-Wert-Verteilung mit $R = 4$ Rekonstruktionsniveaus durch Maximierung der gegenseitigen Information betrachtet. Für $\sigma_L^2 = 10$ beträgt die Entropie der Niveauwahrscheinlichkeiten $H = 1,743$ Bits und eine 1-, 2- oder 3-dimensionale Huffman-Kodierung führt zu einer mittleren Bezeichnerlänge von 1,816; 1,775 und 1,746 Bits. Wenn die Varianz der $L$-Werte auf $\sigma_L^2 = 20$ ansteigt, sinkt die Entropie auf $H = 1,340$ Bits, welche durch eine 1-, 2- oder 3-dimensionale Huffman-Kodierung mit jeweils 1,595; 1,368 und 1,363 Bits approximiert wird. Höhere Dimensionen mit entsprechenden Codebüchern sind ebenfalls möglich.

**Patentansprüche**

1. Verfahren bei einer Signalverarbeitung zur Quantisierung von Likelihood-Quotienten binärer Zufallsvariablen , wobei die genannten quantisierten likelihood. Quotienten zwischen zwei oder mehreren signal vererbeitungsein heiten übermittelt werdem,
   **gekennzeichnet durch**

   - Maximierung (10) der Transinformation zwischen den binären Zufallsvariablen und zugehörigen quantisierten Likelihood-Quotienten bei einer vorgegebenen Wahrscheinlichkeitsverteilung der Likelihood-Quotienten **durch** Variation von Quantisierungsintervallen und Quantisierungswerten, und
   - Ermitteln des Quantisierungsintervalls und der Quantisierungswerte maximaler Transinformation, und
   - Quantisieren (18) der Likelihood-Quotienten unter Verwendung des Quantisierungsintervalls und der Quantisierungswerte maximaler Transinformation.

2. Verfahren bei einer Signalverarbeitung zur Quantisierung von Likelihood-Quotienten nach Anspruch 1,
   **gekennzeichnet durch**
   Erfassen (14) einer Varianz der Likelihood-Quotienten vor der Quantisierung für das Ermitteln der gemannten Quantisierungsintervalle und Quantisierungswerte.

3. Verfahren bei einer Signalverarbeitung zur Quantisierung von Likelihood-Quotienten nach Anspruch 2,

**gekennzeichnet durch** Anpassen (12) einer Näherungsfunktion als Funktion der Varianz die an ermittelten Quantisierungswerte oder Quatisierungsintervalle bei verschiedenen Varianzen der genannten likelihood - Quotienten und Ermitteln (16) der Quantisierungswerte und Quantisierungsintervalle bei der Quantisierung **durch** die Näherungsfunktion.

4. Verfahren bei einer Signalverarbeitung zur Quantisierung von Likelihood-Quotienten nach den Ansprüchen 1 bis 3, **gekennzeichnet durch** Verwenden einer Wertetabelle und/oder einer Interpolation beim Ermitteln der genannten Quantisierungswerte oder Quantisierungsintervalle.

5. Verfahren zur Quantisierung von Likelihood-Quotienten nach den Ansprüchen 1 bis 4, **dadurch gekennzeichnet, dass** eine Entropiekodierung (20) der Quantisierungswerte durchgeführt wird.

6. Quantisierungseinrichtung bei einer Signalverarbeitung zum Quantisieren von Likelihood-Quotienten binärer Zufallsvariablen, wobei die genannten quantisierten likelihood - Quotienten zwischen zwei oder mehreren signalnesortbeitungsein heiten übermittelt werden,
   **dadurch gekennzeichnet, dass**

   - Mittel zur Maximierung der Transinformation zwischen den binären Variablen und den zugehörigen quantisierten Likelihood-Quotienten bei einer vorgegebenen Wahrscheinlichkeitsdichte der Likelihood-Quotienten durch Variation von Quantisierungsintervallen und Quantisierungswerten, und
   - Mittel zum Ermitteln des Quantisierungsintervalls und der Quantisierungswerte maximaler Transinformation, und
   - Mittel zum Quantisieren (18) der Likelihood-Quatienten unter Verwendeung des Quantisierungsintervalls und der Quantisierungswerte maximaler Transiformation vorgesehen sind.

7. Quantisierungseinrichtung bei einer Signalverarbeitung zum Quantisieren von Likelihood-Quotienten nach Anspruch 6,
   **dadurch gekennzeichnet, dass** eine Erfassungseinheit zum Erfassen einer Varianz der Likelihood-Quotienten vor der Quantisierung für eine Ermittlung der genannten Quantisierungsintervalle und Quantisierungswerte vorgesehen ist.

8. Quantisierungseinrichtung bei einer Signalverarbeitung zum Quantisieren von Likelihood-Quotienten nach Anspruch 7,
   **gekennzeichnet durch** Approximationsmittel zum Anpassen einer Näherungsfunktion als Funktion der Varianz an die ermittelten Quantisierungsintervalle oder Quantisierungswerte bei verschiedenen Varianzen der genannten Likelihood - Quotienten und einen Generator zum Ermitteln der Quantisierungswerte und Quantisierungsintervalle bei der Quantisierung mit der Näherungsfunktion.

9. Quantisierungseinrichtung bei einer Signalverarbeitung zum Quantisieren von Likelihood-Quotienten nach einem den Ansprüchen 6 bis 8,
   **dadurch gekennzeichnet, dass** die Quantisierungseinrichtung einen Speicher mit einer Wertetabelle und/oder eine Interpolationseinheit zum Ermitteln der Quantisierungswerte oder Quantisierungsintervalle umfasst.

10. Quantisierungseinrichtung bei einer Signalverarbeitung zum Quantisieren von Likelihood-Quotienten nach einem den Ansprüchen 6 bis 9,
    **dadurch gekennzeichnet, dass** ein Entropiekodierer für die Quantisierungswerte vorgesehen ist.

**Claims**

1. A method in signal processing for quantizing likelihood quotients of binary random variables, wherein said quantized likelihood quotients are transmitted between two or more signal processing units,
   **characterized by**
   maximizing (10) the transinformation between the binary random variables and associated quantized likelihood quotients with a predetermined likelihood distribution of the likelihood quotients by variation of quantizing intervals and quantizing values, and
   determining the quantizing interval and the quantizing values of maximum transinformation, and
   quantizing (18) the likelihood quotients by using the quantizing interval and the quantizing values of maximum transinformation.

2. The method in signal processing for quantizing likelihood quotients pursuant to claim 1,
   **characterized by**
   collecting (14) a variance of the likelihood quotients prior to the quantizing for determining said quantizing intervals and quantizing values.

3. The method in signal processing for quantizing likelihood quotients pursuant to claim 2,
   **characterized by** adapting (12) an approximation function as a function of the variance of said likelihood quotients to the determined quantizing values or quantizing intervals with different variances of said likelihood quotients, and determining (16) the quantizing values and quantizing intervals in quantizing with the approximation function.

4. The method in signal processing for quantizing likelihood quotients pursuant to claims 1 to 3,
   **characterized by** using a value table and/or and interpolation when determining said quantizing values or quantizing intervals.

5. The method for quantizing likelihood quotients pursuant to claims 1 to 4, **characterized in that** entropy coding (20) of the quantizing values is performed.

6. A quantizing device in signal processing for quantizing likelihood quotients of binary random variables, wherein said quantized likelihood quotients are transmitted between two or more signal processing units,
   **characterized in that**
   means for maximizing (10) the transinformation between the binary variables and the associated quantized likelihood quotients with a predetermined likelihood density of the likelihood quotients by variation of quantizing intervals and quantizing values, and
   means for determining the quantizing interval and the quantizing values of maximum transinformation, and
   means for quantizing (18) the likelihood quotients by using the quantizing interval and the quantizing values of maximum transinformation are provided.

7. The quantizing device in signal processing for quantizing likelihood quotients pursuant to claim 6,
   **characterized in that** a collecting unit for collecting a variance of the likelihood quotients prior to the quantizing for the determining of said quantizing intervals and quantizing values is provided.

8. The quantizing device in signal processing for quantizing likelihood quotients pursuant to claim 7,
   **characterized by** approximation means for adapting an approximation function as a function of the variance to the determined quantizing intervals or quantizing values with different variances of said likelihood quotients and a generator for determining the quantizing values and quantizing intervals in quantizing with the approximation function.

9. The quantizing device in signal processing for quantizing likelihood quotients pursuant to any of claims 6 to 8,
   **characterized in that** the quantizing device comprises a memory with a value table and/or an interpolation unit for determining the quantizing values or quantizing intervals.

10. The quantizing device in signal processing for quantizing likelihood quotients pursuant to any of claims 6 to 9,
    **characterized in that** an entropy encoder for the quantizing values is provided.

**Revendications**

1. Procédé, dans un traitement de signal, de quantification de quotients de vraisemblance de variables aléatoires binaires, lesdits quotients de vraisemblance quantifiés étant transmis entre deux ou plusieurs unités de traitement de signal,
   **caractérisé par**

   - la maximisation (10) de l'information mutuelle entre les variables aléatoires binaires et des quotients de vraisemblance quantifiés associés, pour une loi de probabilité prédéfinie des quotients de vraisemblance, par variation d'intervalles de quantification et de valeurs de quantification, et
   - la détermination de l'intervalle de quantification et des valeurs de quantification d'information mutuelle maximale, et

- la quantification (18) des quotients de vraisemblance en utilisant l'intervalle de quantification et les valeurs de quantification d'information mutuelle maximale.

2. Procédé, dans un traitement de signal, de quantification de quotients de vraisemblance, selon la revendication 1, **caractérisé par** l'acquisition (14) d'une variance des quotients de vraisemblance avant la quantification pour la détermination des intervalles de quantification et des valeurs de quantification cités.

3. Procédé, dans un traitement de signal, de quantification de quotients de vraisemblance, selon la revendication 2, **caractérisé par** l'adaptation (12) d'une fonction d'approximation, en tant que fonction de la variance des quotients de vraisemblance cités, aux valeurs de quantification ou intervalles de quantification déterminés, pour différentes variances des quotients de vraisemblance cités, et par la détermination (16) des valeurs de quantification et intervalles de quantification lors de la quantification par la fonction d'approximation.

4. Procédé, dans un traitement de signal, de quantification de quotients de vraisemblance, selon les revendications 1 à 3, **caractérisé par** l'utilisation d'un tableau de valeurs et/ou d'une interpolation lors de la détermination des valeurs de quantification ou intervalles de quantification cités.

5. Procédé de quantification de quotients de vraisemblance, selon les revendications 1 à 4, **caractérisé en ce que** l'on effectue un codage entropique (20) des valeurs de quantification.

6. Dispositif de quantification, dans un traitement de signal, pour la quantification de quotients de vraisemblance de variables aléatoires binaires, lesdits quotients de vraisemblance quantifiés étant transmis entre deux ou plusieurs unités de traitement de signal, **caractérisé en ce que** sont prévus

- des moyens pour la maximisation de l'information mutuelle entre les variables binaires et les quotients de vraisemblance quantifiés associés, pour une densité de probabilité prédéfinie des quotients de vraisemblance, par variation d'intervalles de quantification et de valeurs de quantification, et
- des moyens pour la détermination de l'intervalle de quantification et des valeurs de quantification d'information mutuelle maximale, et
- des moyens pour la quantification (18) des quotients de vraisemblance en utilisant l'intervalle de quantification et les valeurs de quantification d'information mutuelle maximale.

7. Dispositif de quantification, dans un traitement de signal, pour la quantification de quotients de vraisemblance, selon la revendication 6, **caractérisé en ce qu'**il est prévu une unité d'acquisition pour l'acquisition d'une variance des quotients de vraisemblance avant la quantification pour une détermination des intervalles de quantification et des valeurs de quantification cités.

8. Dispositif de quantification, dans un traitement de signal, pour la quantification de quotients de vraisemblance, selon la revendication 7, **caractérisé par** des moyens d'approximation pour l'adaptation d'une fonction d'approximation, en tant que fonction de la variance, aux intervalles de quantification ou valeurs de quantification déterminés, pour différentes variances des quotients de vraisemblance cités, et par un générateur pour la détermination des valeurs de quantification et des intervalles de quantification lors de la quantification avec la fonction d'approximation.

9. Dispositif de quantification, dans un traitement de signal, pour la quantification de quotients de vraisemblance, selon l'une des revendications 6 à 8, **caractérisé en ce que** le dispositif de quantification comprend une mémoire avec un tableau de valeurs, et/ou une unité d'interpolation, pour la détermination des valeurs de quantification ou intervalles de quantification.

10. Dispositif de quantification, dans un traitement de signal, pour la quantification de quotients de vraisemblance, selon l'une des revendications 6 à 9, **caractérisé en ce qu'**il est prévu un dispositif de codage entropique pour les valeurs de quantification.

10

12

14

16

20

18

Fig. 1

Fig. 2

Fig. 3

|  | a | b | c |
|---|---|---|---|
| $R = 2, r_1$ | 0.4473 | 0.2806 | 0.1075 |
| $R = 3, r_1$ | 0.6865 | 0.4861 | 0.0955 |
| $R = 3, d_1$ | 0.218 | 0.4082 | -0.01687 |
| $R = 4, r_1$ | 0.1305 | 0.3251 | -0.01053 |
| $R = 4, r_2$ | 0.8214 | 0.6343 | 0.08861 |
| $R = 4, d_1$ | 0.33 | 0.6509 | -0.02219 |
| $R = 5, r_1$ | 0.2361 | 0.5248 | -0.01938 |
| $R = 5, r_2$ | 0.9179 | 0.7457 | 0.08219 |
| $R = 5, d_1$ | 0.1605 | 0.2223 | -0.01146 |
| $R = 5, d_2$ | 0.3924 | 0.8367 | -0.02881 |
| $R = 6, r_1$ | 0.1299 | 0.1831 | -0.009314 |
| $R = 6, r_2$ | 0.3312 | 0.6499 | -0.02541 |
| $R = 6, r_3$ | 1.002 | 0.8184 | 0.07718 |
| $R = 6, d_1$ | 0.2813 | 0.3667 | -0.01879 |
| $R = 6, d_2$ | 0.4546 | 0.9589 | -0.03378 |
| $R = 8, r_1$ | 0.1358 | 0.09532 | -0.006295 |
| $R = 8, r_2$ | 0.3794 | 0.3377 | -0.01972 |
| $R = 8, r_3$ | 0.5314 | 0.7521 | -0.03236 |
| $R = 8, r_4$ | 1.179 | 0.8661 | 0.07178 |
| $R = 8, d_1$ | 0.2737 | 0.199 | -0.01278 |
| $R = 8, d_2$ | 0.4993 | 0.4999 | -0.02727 |
| $R = 8, d_3$ | 0.611 | 1.063 | -0.0398 |

# Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. LLOYD.** Least squares quantization in PCM. *IEEE Trans. Inf. Theory,* 1982, vol. IT-28, 129-137
- **J. MAX.** Quantizing for minimum distortion. *IEEE Trans. Inf. Theory,* 1960, vol. 6, 7-12
- **S. KHATTAK ; W. RAVE ; G. FETTWEIS.** Distributed Iterative Multiuser Detection through Base Station Cooperation. *EURASIP J. on Wireless Comm. and Networking,* 2008
- **THOMAS M. COVER ; JOY A. THOMAS.** Elements of Information Theory. John Wiley & Sons, 2006
- **A. GERSHO ; R. M. GRAY.** Vector Quantization and Signal Compression. Kluwer, 1992